# EUROPEAN PATENT APPLICATION

(11) **EP 4 732 726 A1**
(43) Date of publication of application: **29.04.2026**
(21) Application number: 25211103.4
(22) Date of filing: 24.10.2025
(51) Int. Cl.: A47J 36/16, A47J 36/20

(54) **VENTED HOLDING PAN**

(30) Priority: 24.10.2024 US 202463711419 P; 21.10.2025 US 202519364799
(71) Applicant: Marmon Foodservice Technologies, Inc., Osseo, MN 55369 (US)
(72) Inventor: Kraus, Michael, Osseo, 55369 (US); Birla, Sohan, Osseo, 55369 (US); Greenberg, Jacob C., Osseo, 55369 (US)
(74) Representative: Slingsby Partners LLP

(57) **Abstract**

A food holding pan and a trivet for a food holding pan are disclosed. The pan includes opposed side walls, opposed end walls, and a pan bottom connected to the opposed side walls and the opposed end walls, all of which define a food receiving area. A plurality of ribs extending into the food receiving area in a direction away from the pan bottom, with the plurality of ribs defining at least one channel therebetween. A plurality of vents are in fluid communication with the food receiving area and configured to promote a flow of air through the food receiving area.

## Description

### CROSS-REFERENCE TO RELATED APPLICATIONS

The present application claims priority to US Provisional Patent Application No. 63/711,419 filed on October 24, 2024, the contents of which are hereby incorporated by reference in its entirety.

### BACKGROUND

The present disclosure relates to the field of restaurants or food preparation. More specifically, the present disclosure relates to a food holding pan with improved circulation.

Various types of ovens or food warming units are used in the food industry. Such ovens and food warming apparatus allow precooked food items to be stored separately until needed. For instance, when a quick serve restaurant receives an order for a sandwich, the sandwich may be assembled on a food preparation table where the contents of certain sandwich items may be removed from food warming units. The storing of precooked food in food warming units enables quick assembly of the sandwich and efficient order fulfillment.

The conditions in which the cooked food is held play a significant role in the quality, palatability, and consumption safety of the precooked food. Inventory control of precooked food items can reduce the amount of precooked food held and the length of time that individual precooked food items are held. However, tighter inventory control requires more frequent cooking of smaller batches of food items.

Food holding Food storage, preparation, and holding require the food to be moved through a kitchen environment and to be treated by various devices within the kitchen. This may include a freezer or refrigerator, a griddle or deep fryer, and a holding bin. Even with the use of kitchen management systems to track food orders and inventory, manual inputs and operator knowledge of current food status and conditions are frequently relied upon to supplement the information reported in the kitchen management system. Manual control or override of unconnected kitchen devices can introduce error in quality control and inventory management operations. Therefore, increased tracking and knowledge of food item status, quality, and count within the kitchen is needed.

US Patent No. 7,132,926, which is incorporated by reference herein in its entirety, discloses a smart tray system with a plurality of information tags and a plurality of communications devices which can communicate with each of the information tags when the information tags are located in the proximity of the communication devices. Each information tag is attached to a food tray and contains information about the food tray and the food product contained therein. The information tags and the communication devices provide for tracking and updating the information about the food product contained in the food trays.

US Patent No. 11,278,157, which is incorporated by reference herein in its entirety, discloses a food holding tray and a system for holding prepared food items. The tray includes a shell that defines at least one food receiving area internal to the shell. A plurality of sensors are arranged about the shell and directed into the food receiving area. A processor is communicatively connected to the plurality of sensors to receive signals from the sensors. The processor calculates holding data from the signals received from the sensors.

US Patent No. 11,344,156, which is incorporated by reference herein in its entirety, discloses a food holding system with a sensor disposed within or in connection to a food pan that is removably inserted within the food holding cavity of a food holding chamber. The sensor is configured to sense a characteristic of an interior environment of the food pan and communicate with the food holding chamber or the chamber base.

US Patent Application Publication No. 2024/0249089, which is incorporated by reference herein in its entirety, discloses a food holding pan communication system with a food holding pan having a pan identifier and configured to receive food items.

### BRIEF DISCLOSURE

A food holding pan is provided that includes opposed side walls, opposed end walls, and a pan bottom connected to the opposed side walls and the opposed end walls, all of which define a food receiving area. The pan includes a plurality of ribs extending into the food receiving area in a direction away from the pan bottom, with the plurality of ribs defining at least one channel therebetween. A plurality of vents are in fluid communication with the food receiving area and configured to promote a flow of air through the food receiving area.

The food holding pan may further include a pan identifier affixed to the food holding pan, wherein the pan identifier includes at least one of an RFID tag or a sensor wherein the sensor measures at least one of temperature or humidity. The plurality of ribs may be integral with the pan bottom. In some embodiments, the plurality of ribs extend from the pan bottom up at least one of the end walls or the side walls, and the plurality of vents are positioned in at least one of the end walls or the side walls between the plurality of ribs. The food holding pan may include at least one handle extending from an end wall of the opposed end walls, with the at least one handle extending generally in a longitudinal direction and the end wall extending generally in a lateral direction, wherein the plurality of ribs and the at least one channel further extend along the pan bottom in the lateral direction, and an additional channel extending along the pan bottom in the longitudinal direction through the plurality of ribs. In certain implementations, the food holding pan includes at least one handle extending from an end wall of the opposed end walls, with the at least one handle extending generally in a longitudinal direction and the end wall extending generally in a lateral direction, wherein the plurality of ribs and the at least one channel further extend along the pan bottom in the longitudinal direction. The plurality of vents may include upwardly and outwardly extending louvers. The food holding pan may further include a trivet, with the trivet configured to be removably received interior of the side walls, end walls, and the pan bottom, wherein the trivet further defines the food receiving area and includes the plurality of ribs. In some embodiments, the trivet defines a hollow passage between the trivet and the pan bottom, and a plurality of holes extend through at least one of the ribs or the at least one channel. The trivet may further include at least one of a pan identifier or a sensor affixed to the food holding pan, wherein the sensor measures at least one of temperature or humidity.

A food holding pan is provided that includes opposed side walls, opposed end walls, and a pan bottom connected to the opposed side walls and the opposed end walls. The pan includes a trivet configured to be removably received interior of the opposed side walls, opposed end walls, and the pan bottom and configured to define a food receiving area. The trivet further includes at least one rib extending into the food receiving area in a direction away from the pan bottom, at least one channel adjacent the at least one rib, and a plurality of holes, with at least one hole extending through at least one of the at least one rib or the at least one channel. The trivet is configured to define a hollow passage between the trivet and the pan bottom.

The food holding pan may further include at least one vent in fluid communication with the food receiving area through the hollow passage and the plurality of holes, and configured to promote a flow of air through the food receiving area. The at least one vent may include a plurality of vents that extend through at least one of the end walls or the side walls. In some embodiments, the trivet includes trivet side walls or trivet end walls and an upward facing surface extending therefrom to define the hollow passage about the plurality of vents to promote the flow of air through the vents into the hollow passage and to the food receiving area from the hollow passage. The food holding pan may be configured to collect condensation from the food receiving area in the hollow passage. The food holding pan may further include at least one stanchion extending from the trivet in a direction opposite the at least one rib and configured to define the hollow passage. In certain implementations, the food holding pan is configured to collect condensation from the food receiving area within the hollow passage between the trivet and the pan bottom.

A trivet is provided that is configured to be removably received within a food holding pan. The trivet includes at least one rib, at least one channel adjacent the at least one rib, and a plurality of holes, with at least one hole extending through at least one of the at least one rib or the at least one channel. The trivet is configured to define a hollow passage at least partially below the plurality of holes.

The trivet may further include an identifier and/or a sensor. In some embodiments, the trivet includes at least one stanchion extending in a direction opposite the at least one rib and configured to define the hollow passage, wherein the at least one rib is a plurality of ribs that extend along a major axis dimension of the trivet, and the at least one channel is between ribs of the plurality of ribs, and the plurality of holes extend through the at least one rib and the at least one channel.

### BRIEF DESCRIPTION OF THE DRAWINGS

Figure 1 is an environmental view of an example of a kitchen.
Figure 2 is a perspective view of an example a food holding pan.
Figure 3 is a perspective view of an example of a food holding pan.
Figure 4 is a perspective view of an example of a food holding pan.
Figure 5 is a perspective view of an example of a food holding pan.
Figure 6 is a sectional view of an example of a food holding pan.
Figure 7 is a sectional view of an example of a food holding pan.
Figures 8A and 8B provide examples of a food holding pan with a channel in a longitudinal direction.
Figure 9 is a perspective view of an example of a food holding pan with an example of a trivet.
Figure 10 is a sectional view taken along line 10-10 of Fig. 9.
Figure 11 is a perspective sectional view of a food holding pan with an example of a trivet.
Figure 12 is a perspective sectional view of a food holding pan with an example of a trivet.
Figure 13 is a perspective sectional view of a food holding pan with an example of a trivet.

### DETAILED DISCLOSURE

Examples of food holding pans and systems thereof that provide improved humidity and/or moisture management of previously cooked food items.

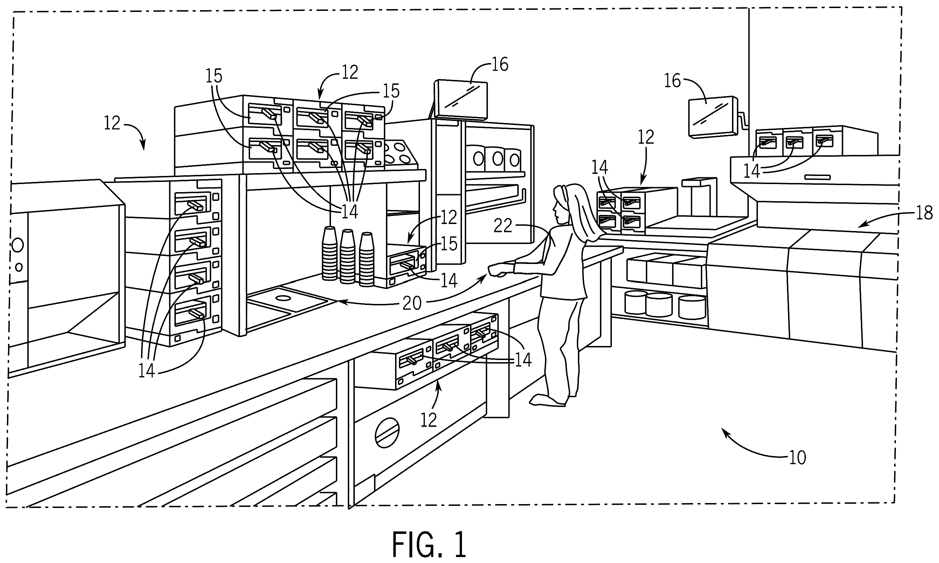

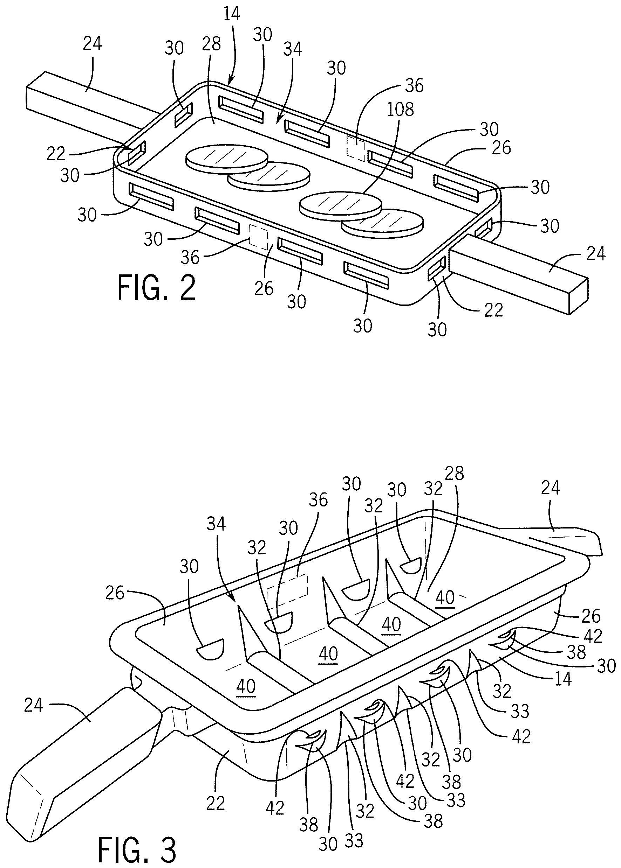

Figure 1 depicts an exemplary view of a kitchen 10, for example as found in a quick service restaurant. The kitchen 10 includes a variety of holding bins 12 positioned at one or more locations within the kitchen 10. The holding bins 12 each include one or more compartments 15. The compartments 15 are each configured to receive one or more pan 14. A non-limiting example of a pan is shown in Fig. 2. The holding bins 12 may be configured to receive pans 14 in a grid arrangement, for example but not limited to, 2x2, 2x4, or 3x4. The pans 14 are each configured to hold a plurality of cooked food products therein. The holding bin 12 includes heating elements and or other environmental control devices, for example, chillers, fans, or humidifiers, in association with the compartments 15. The environmental control devices are operable to change the environment within the compartment 15. Interaction between the pan 14 and the holding bins 12 maintain an environment about the cooked food product within the pan 14 to prolong and preserve food quality, palatability, and safety. Non-limiting examples of food holding bins are provided in US 2021/0307563, entitled "Capacitive Touch Universal Holding Bin", US 10,852,002, entitled "Multi-zone Food Holding Bin" and US 10,841,981, entitled "Multi-zone Food Holding Bin," the contents of which are all incorporated by reference herein in their entireties.

In an exemplary embodiment, graphical displays 16 may be located and/or orientated within the kitchen 10 for the display of food order information, and/or information regarding the status of the pan 14, and/or the food held within pans 14. The kitchen 10 includes a cooking station 18, for example where protein such as hamburger patties or chicken breasts are cooked before the cooked food items are placed in a pan 14. It will also be recognized that any of a number of food cooking apparatuses, including, but not limited to grills, griddles, broilers, fryers, steamers, ovens, or toasters may be used in the place of, in addition to, or in combination with to prepare food items for consumption. A pan 14 typically receives cooked food items 108 of a single food item type (e.g. 1:10 hamburger patty, 1:4 hamburger patty, chicken breast, chicken nuggets, etc.) For inventory management purposes, each food item type will typically be prepared in a batch of a predefined numeric count. A single pan 14 is subsequently filled with a batch of a single food item. A customer order is assembled using one or more previously cooked food item having been held in one or more pans 14.

The pan 14 may include features as currently known in the industry, for example, having a configuration with an elongated dimension separating two ends and defining a food receiving area 34 of the pan 14. The pan 14 may have a handle 24 extending away from one or both of the ends. The handle 24 is gripped by a user to facilitate transport of the pan, for example from the cooking station 18 to the holding bin 12. As will be recognized, holding bins 12 may be open on one side or to two sides. A pan 14 with two handles 24 facilitates use by food service workers positioned at opposite sides of a holding bin 12 open to two sides.

The pan 14 may exemplarily include an identifier 36. The identifier 36 may exemplarily take the form of an RFID tag or a QR code. Other forms of identifiers or combinations of identifiers may be used, including but not limited to ZigBee, ANT, NFC, or short range wireless devices, while remaining within the scope of the present disclosure. Apparatus within the kitchen 10, including, but not limited to the holding bins 12 may be configured with one or more readers to read the identifier 36. The identifier 36 exemplarily encodes information that identifies an individual pan 14 within the kitchen. The identification information may be an alpha-numeric string or code. A computer operating a kitchen management system (KMS), may operatate to monitor the overall food inventory and condition within the kitchen. The encoded information in the identifier 36 that identifies an individual pan further enables similar tracking of pan inventory, condition, and use as described in further detail herein. A database may be managed and referenced using the identification of the pan to provide a current status of the pan, for example: clean and ready to receive food, already in use, needs washing, remove from circulation, etc. If a pan is in use, an identification of the food item assigned to the pan may be recorded in the database. In an example, the KMS may perform a condition check against this database using the identification of the pan to confirm that the identified individual pan 14 has not been marked as defective, dirty, damaged or otherwise unavailable for use. In a further example, confirmation may be made that the individual pan has been cleaned according to a cleaning protocol tracked in the same or similar manner as described herein for handling food.

In still further examples, the identifier 36 may additionally or instead be a wireless sensor, for example, a temperature and/or humidity sensor. The sensor may also be provided as a stand-alone component. One non-limiting example of such sensors are those as available from Disruptive Technologies of Lysaker, Norway. The wireless sensor may include the alpha-numeric string or code used to identify the sensor as well as the pan as described above. Additionally, such sensor may provide temperature and/or humidity information locally to the holding bin 12 in which the pan 14 is positioned or to the KMS as described above, and which the sensed information may be stored in the database and/or another database as described above. This database may be used to monitor the temperature and/or humidity conditions within the pan to provide a record of those conditions while the food items are being held within the pan. This record may be compared to customer internal quality and/or food safety condition specifications. The temperature and/or humidity information may be provided back to the holding bin 12, and for example, incorporated into holding bin temperature control.

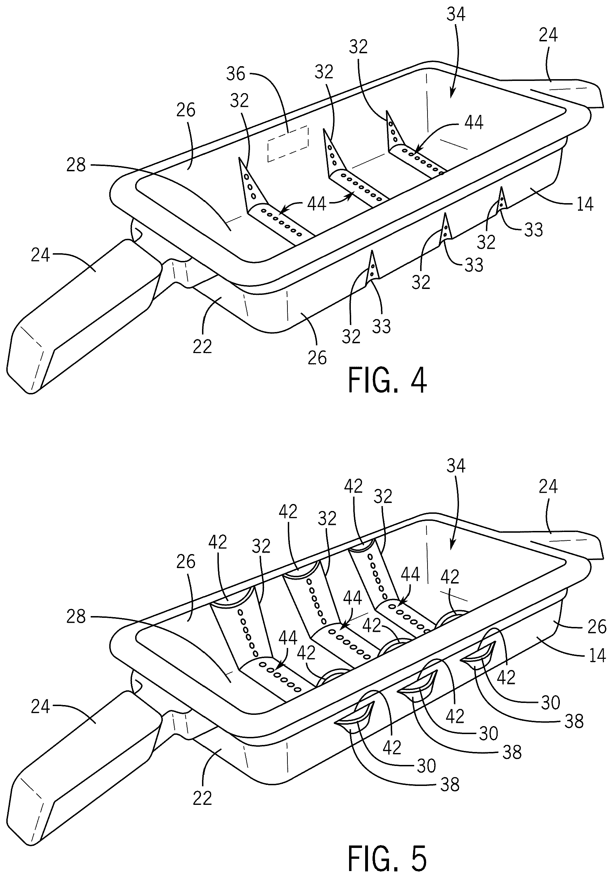

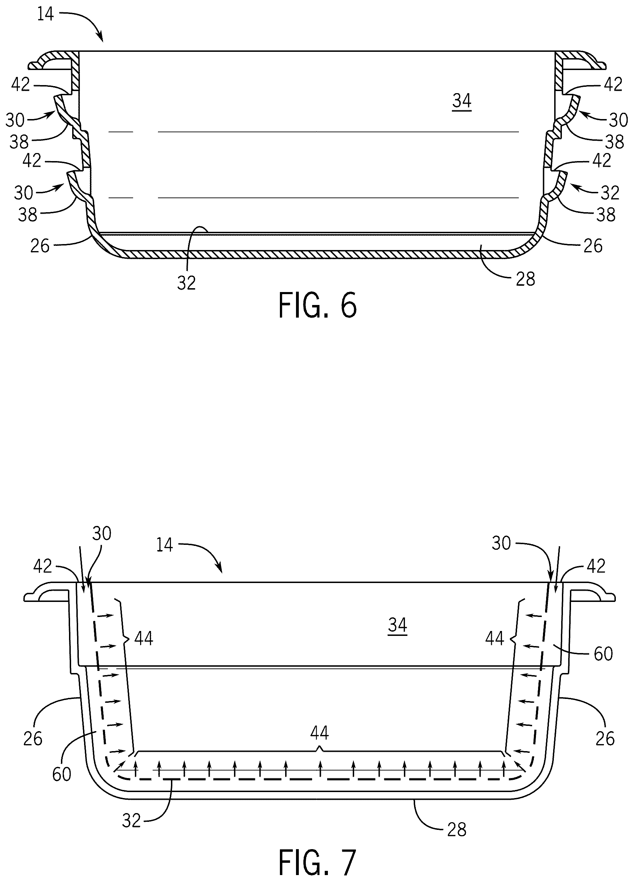

Figures 2-4 all depict perspective views of examples of pans 14 as disclosed herein. Figures 5 and 6 depict sectional views of still further examples of pans 14 as disclosed herein. It will be recognized that Figures 2-6 are merely exemplary of the pans disclosed herein and that features or concepts disclosed with respect to one of Figures 2-6 may be incorporated with other features described within the present application with or without respect to any other of Figures 2-6 while remaining within the scope of the present disclosure.

Figure 2 depicts an example of the pan 14, having two end walls 22 to which handles 24 are respectively secured. The pan 14 has two side walls 26 parallel to each other and perpendicular to the end walls 22. The pan 14 further includes a bottom 28. Together, the end walls 22, side walls 26, and bottom 28 define a food receiving area 34 for holding a plurality of previously cooked food items 108. A plurality of vents 30 exemplarily extend through the end walls 22 and/or the side walls 26. This provides a fluid communication between air external to the pan 14 with air within the food receiving area 34. However, it will be recognized, that as depicted for example in Fig. 1, that one or both end walls 22 may be exposed to the environment outside of a holding bin 12 when placed within the holding bin 12. Exemplarily, the one or more handles 24 extend out of the compartment 15 with the respective end wall 22 similarly facing external of the compartment 15. Vents 22 exposed to the environment outside of the holding bin 12, may facilitate ingress of ambient air from outside of the compartment 15, and thus negatively impact the temperature maintained within the food receiving area 34 and the stability of that temperature environment. Therefore, while vents 30 are depicted in Fig. 2 located through the end walls 22, it will be recognized that other examples of pans may only include vents 30 in the side walls 26. The vents 30 as shown are exemplarily rectangular and arranged with an elongated axis horizontal, e.g. in the same direction as the bottom 28. However, it will be recognized that the vents 30 may take a variety of other shapes and sizes, including but not limited to circles, ovals, or parallelograms. The vents 30 may further be oriented vertically or diagonally as well. The vents 30 may be located in lower half or lower third of the walls 22, 26 of the pan 14, towards the bottom 28. In other examples, vents 30 may be stacked or offset in a vertical dimension of the walls 22, 26.

The vents 30 facilitate air flow into and out of the food receiving area 34. Accumulation of humidity condensing into moisture within the food receiving area 34 may be absorbed by the crispy surface (eg. breading) of the previously cooked food product thereby reducing its overall palatability to the customer and resulting in reduced effective holding time, even if the previously cooked food product can be held within a food safety temperature specification for longer. With the assumption that air external to the pan 14 and the food receiving area 34 is dryer than that in the food receiving area 34 and immediately surrounding the previously cooked food product, the ingress of ambient air into the food receiving area 34 and egress of humidified air from the food receiving area promotes humidity and texture control of crispy previously cooked food products.

The vents 30 are arranged to accommodate other physical structures of the pan 14. If vents 30 exist in the end walls 22, such vents 30 may be located to the sides of the handles 24. The vents 30 may also be located to accommodate the identifier 36. It will be recognized that physical structures of the pan 14 may be positioned or located on the pan 14 in relation to other features of the holding bin 12. For example, a holding bin 12 with only a front facing opening to the compartment 15 would use a pan 14 with only a single handle 24 while a pan with two opposed handles 24 (as depicted in Fig. 2) is configured for use with a holding bin 12 with front and rear facing openings to the compartment. Similarly, the identifier 36 may be positioned on a pan relative to an identifier reader (e.g. camera, IR scanner, NFC communication reader, magnetic reader, RFID reader, etc.) within the compartment 15 of the holding bin 12.

Figure 3 depicts another example of a pan 14, with like reference numbers indicating like structures between the examples and based upon the disclosure herein a person of ordinary skill in the art could combine features of the pan 14 with any of the other features shown in the other examples herein while remaining within the scope of the present disclosure. The pan 14 includes ribs 32, which are exemplarily integrally molded in the pan 14. The ribs 32 protrude upwards from the bottom 28 into the food receiving area 34, and also may extend vertically along the side walls 26 terminating either partially up the side wall 26 or extending to the top of the side wall 26 as will be described in further detail herein. While the ribs 32 may be solid in a thickness dimension, as shown, the ribs 32 are approximately the same thickness as the bottom 28, side walls 26, and/or the end walls 22, thereby forming a depression 33 in an exterior surface of one or more of those components corresponding to the protrusion of the ribs 32 into the food holding area 34. These depressions 33 may facilitate a nested relationship between multiple pans 14 when stacked together with the protrusion of the ribs 32 fitting within the depression 33 of a subsequent pan 14.

The ribs 32 function to elevate the previously cooked food product (see Figs. 1 and 2) off of the bottom 28 of the pan 14. This serves two purposes facilitating humidity control of crispy cooked food product. First, if any moisture condenses and accumulates in the pan 14, the moisture will naturally seek the lowest level of the pan 14 and accumulate within channels 40 formed at the bottom 28 between the ribs 32. With the previously cooked food product resting on the ribs 32 and off of the bottom 28, the condensed moisture is accumulated away from the previously cooked food product. Secondly, the vents 30 are exemplarily arranged between the ribs 32 and in alignment with the channels 40. Air flow is thus directed through the channels 40 to help to circulate air through the pan, controlling the humidity of the previously cooked food product. Air flow circulation may occur in a variety of directions, for example based upon convection currents and holding bin 12 configuration. Ambient air may ingress through the vents 30 on one side, be directed into the channels 40, collect humidity from any moisture accumulated in the channels 40, and exit through vents 30 on an opposite side. Ambient air may ingress through all vents 30, be directed centrally by the channels 40 then rise through the previously cooked food product, collecting humidity away from the previously cooked food product before exiting through the open top of the pan 14. In a still further example, ambient air may ingress through the open top of the pan 14, flow through the food receiving area 34 and past the previously cooked food product, collecting moisture from the previously cooked food product. Once reaching the bottom 28, the circulating air is directed through the channels 40 and out the vents 30.

The vents 30 as depicted in Fig. 3 exemplarily include louvers 38. The louvers 38 project outward from the exterior of the side walls 26 and define a vent opening 42 that is oriented generally upwards. The louvers 38 are exemplarily formed as an integral rounded bulge in the side wall 26, however, it will be recognized that other examples or forms of louvers 38 are contemplated within the scope of the present disclosure including more rectangular or angular configurations. The upwardly-oriented vent openings 42 may facilitate air circulation within the pan 14, whereby ingress of ambient air through the vent openings 42 is directed downwardly into the channels 40 and/or egress of humidified air from the pan 14 through the vent openings 42 is directed upwardly from the bottom 28 of the pan 14. Additionally, the louvers 38 ending in the upwardly-oriented vent openings 42 facilitate the air flow as described above, while retaining any crumbs, pieces of food, or grease from the crispy previously cooked food items within the food receiving area 34 of the pan 14.

Figure 4 depicts another example of a pan 14, with like reference numbers indicating like structures between the examples and based upon the disclosure herein a person of ordinary skill in the art could combine features of the pan 14 of Fig. 4 with any of the other features shown in the other examples herein while remaining within the scope of the present disclosure. In Fig. 4, the pan 14 combines the vents into the ribs 32. The ribs 32 include a plurality of vent holes 44 through the ribs 32. The depressions 33 in the exterior of the pan 14 corresponding to each rib 32 forms a channel to promote air flow exterior of the pan 14 for ingress through the vent holes 44 into the food holding area 34. This flow of air continues past the previously cooked food items and exits the pan 14 through the open top.

Figure 5 depicts another example of a pan 14, with like reference numbers indicating like structures between the examples and based upon the disclosure herein a person of ordinary skill in the art could combine features of the pan 14 of Fig. 5 with any of the other features shown in the other examples herein while remaining within the scope of the present disclosure. In Fig. 5, the pan 14 includes ribs 32 that protrude into the food holding area 34, but do not form the depressions in the exterior of the pan as shown and described with respect to Figs. 3 and 4. The ribs 32 define hollow spaces between the bottom 28 of the pan and the rib 32. The ribs 32 are connected to one or more vents/vent openings for the ingress of ambient air into the ribs 32 and through vent holes 44 into the food holding area 34. Vents 30 as shown and described above with respect to Figs. 2-4 may provide an opening through the side walls 26 into the interior of the ribs 32 for the ingress of ambient air. In addition, or alternatively, the ribs 32 may extend the entire vertical extent of side walls 26, and open in vent openings 42 in an upward direction to promote the ingress of ambient air into the ribs 32 and subsequently out through the holes 44 to circulate upwards through the food holding area 34.

Figure 6 depicts another example of a pan 14, with like reference numbers indicating like structures between the examples and based upon the disclosure herein a person of ordinary skill in the art could combine features of the pan 14 of Fig. 6 with any of the other features shown in the other examples herein while remaining within the scope of the present disclosure. Figure 6 is a sectional view of an example of a pan 14 showing an example of vents 30 vertically stacked along the side wall 26 and further shows a cross section of an example of the louvers 38. As previously noted, the vents 30 may be spaced in a vertical and/or horizontal dimension. An example of a rib 32 protruding from the bottom 28 is also depicted.

Figure 7 depicts another example of a pan 14, with like reference numbers indicating like structures between the examples and based upon the disclosure herein a person of ordinary skill in the art could combine features of the pan 14 of Fig. 7 with any of the other features shown in the other examples herein while remaining within the scope of the present disclosure. Fig. 7 is a sectional view of an example of a pan 14 with a rib 32 forming a hollow passage 60 between the side walls 26 and bottom 28 and the rib 32. The rib 32 includes a plurality of holes 44, similar to those as shown and described with respect to Figs. 4 or 5. Ambient air enters the rib 32 through vent openings 42 and exits the rib 32 through holes 44 into the food holding area 34 for circulation past the previously cooked food items.

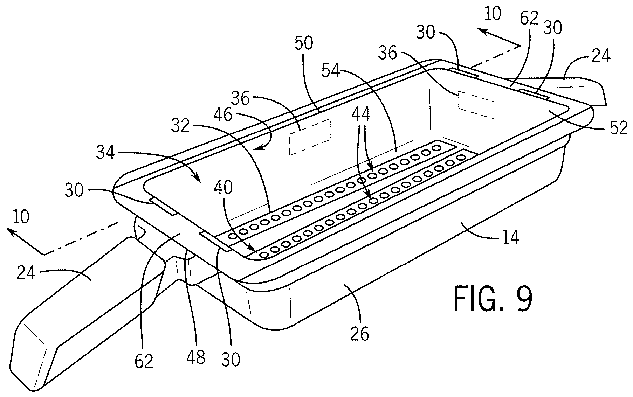

Fig. 7 may also represent a cross-sectional view of a still further example of the vented holding pan 14. The dashed line may represent a vent insert trivet that rests in the interior of a standard food holding pan. The vent insert may be made of a similar material as the pan 14 or may be made of another polymer, plastic, or metal material. The vent insert may rest on stanchions (not depicted) either as a part of the vent insert or as a part of the pan, the stanchions space the vent insert, that includes the plurality of holes, from the bottom 28 and side walls 26. This creates an air passage from the upwardly-oriented vent openings 42 through which an ingress of air flows for injection into the food holding area 34 through the plurality of holes 44. While not depicted ribs may further be formed in the vent layer to create additional space between the holes 44 and the previously cooked food items. Examples of this are described in further detail herein with respect to Figure 9.

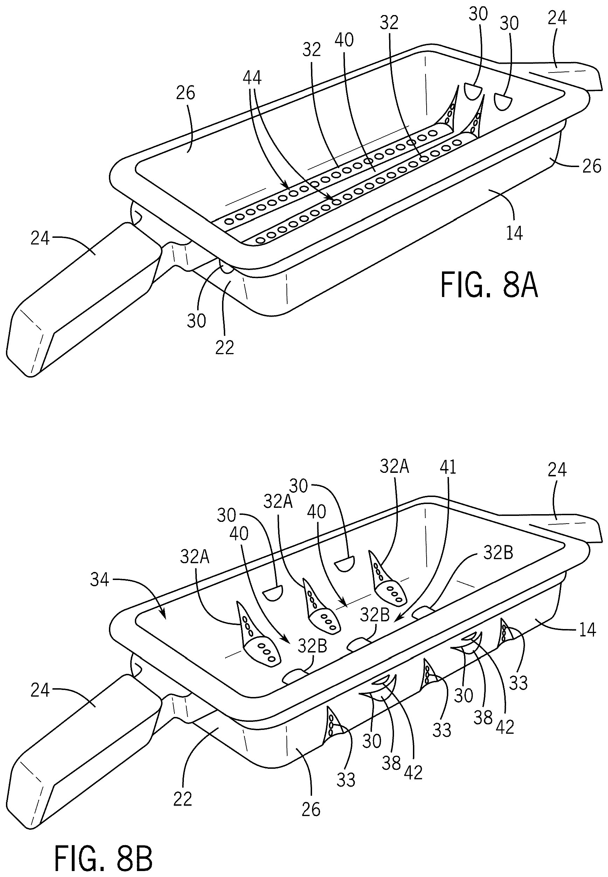

Figures 8A and 8B depict further examples of a pan 14, with like reference numbers indicating like structures between the examples and based upon the disclosure herein a person of ordinary skill in the art could combine features of the pan 14 of Figs. 8A or 8B with any of the other features shown in the other examples herein while remaining within the scope of the present disclosure. Additionally, examples of the pan 14 depicted in Figs. 8A or 8B may include more or fewer components than depicted in those specific examples while remaining within the scope of the present disclosure. In Fig. 8A, the ribs 32, which are exemplarily constructed as shown and described with respect to Fig. 4, are oriented longitudinally along a major axis of the pan 14, for example extending between end walls 22 and/or oriented in a generally same direction as the handle(s) 24. The longitudinal orientation of the ribs 32 similarly longitudinally orients the channels 40 between the ribs 32. At least one channel 40 therefore extends along the longitudinal dimension of the pan 14.

In use, a user may grip the handle 24 to remove or partially remove the pan 14 from the compartment 15 of the holding bin 12. The food product contained therein may be removable using a utensil, for example a scoop or tongs. The ribs 32 and the channels 40 oriented in the longitudinal dimension facilitates the removal of food products from the pan 14, for example using a utensil, by providing a path along which the utensil may move when gathering or obtaining the food product. In this manner the ribs 32 both facilitate elevation and air circulation around the food product, but also removal of the food product which may reduce damage to the food product and resulting waste thereof.

Figure 8B provides another example with a feature similar to that of Fig. 8A. While Fig. 8B depicts a pan 14 with ribs 32 that extend in a lateral dimension across the pan 14, eg. in a direction between side walls 26 instead of end walls 22. A longitudinal channel 41 is provided in the longitudinal dimension across the ribs 32. That is, in an example, the ribs 32 are reduced or non-existent along the longitudinal channel 41. The longitudinal channel 41 provides the same benefits as described above with respect to the channels 40 that extend in the longitudinal dimension as well, namely that a channel or channels 40, 41 oriented in this direction facilitate removal of food product from the pan 14.

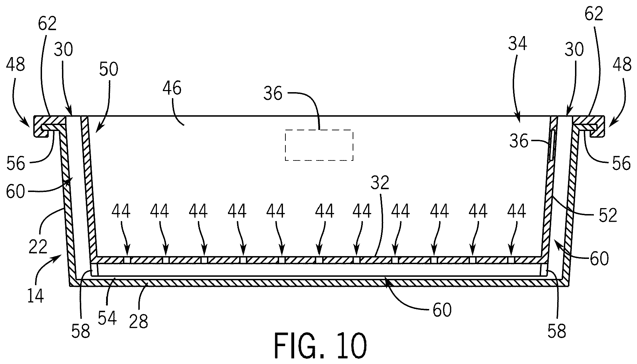

Figure 9 is a perspective view of an example of a food holding pan 14 with a trivet 50 that is sized and dimensioned to secure to and within a pan 14. Figure 9 depicts further examples of a pan 14, with like reference numbers indicating like structures between the examples and based upon the disclosure herein a person of ordinary skill in the art could combine features of Figs. 9 or 10 with any of the other features shown in the other examples herein while remaining within the scope of the present disclosure. Additionally, examples depicted in Figs. 9 and 10 may include more or fewer components than depicted in those specific examples while remaining within the scope of the present disclosure. In this manner, the functionalities of the pans 14 as have been described herein, including but not limited to, elevation, venting, and air flow, as well as incorporation of an identifier or other tracking element may be added to a pre-existing food holding pan 14, for example a food holding pan 14 constructed of for example, but not limited to polycarbonate, polyurethane, or polyethylene. As described in connection with the examples provided herein, an insertable trivet 50 can provide some or all such functionalities to a pre-existing food holding pan 14. The trivet 50 may provide the additional benefits of being removable for cleaning or for repair or replacement of the trivet 50 or pan 14. Some of the features and functionalities of the trivet 50 as described herein may be more advantageous for some types of food products (e.g. fried and/or breaded food products) and therefore the insertable trivet 50 enables selective use or incorporation of these features into a pan 14 for holding of those food products which would benefit from the features as described herein.

Figure 10 is a sectional view taken along line 10-10 of Fig. 9. The trivet 50 exemplarily includes clips 48 that are configured to extend over a lip 56 of the pan 14. These clips 48 may be positioned and dimensioned to secure to the lip 56 in a region about the end walls 22 as depicted in Figs. 9 and 10, or may be positioned and dimensioned to secure to the lip 56 in a region about the side walls 26. In still further examples, the clips may be positioned and dimensioned to secure to lips 56 about the end walls 22 and the side walls 26. In another example, the trivet 50 may clip to or otherwise secure the to the handle 24 or handles 24. This may include a secondary piece (not depicted that secures about the handle 24 and connects to the trivet 50 to secure the trivet 50 to the handle 24 and the pan 14. Still further examples of the trivet 50 may not use clips as shown and described and rather use interference or friction fit between the trivet 50 and an interior of the pan 14.

The trivet 50 defines the food receiving area 34, as described above. The trivet extends between insert end walls 52 and trivet side walls 46. The trivet further includes an trivet bottom 54 to define the food receiving area 34 along with the trivet end walls 52 and the trivet side walls 46. One or more ribs 32 extend into the food receiving area 34 from at least the trivet bottom 54, but may also extend from the trivet end walls 52 and/or the trivet side walls 46 while remaining within the present disclosure. The at least one rib 32 exemplarily includes a plurality of holes 44 therein, which holes are connected to at least one hollow passage 60 defined by the trivet 50 as described in further detail herein.

As depicted, the trivet 50 further defines at least one hollow passage 60 exemplarily between the trivet 50 and a corresponding structure of the pan 14. The hollow passage 60 may extend between portions of the trivet end walls 52 and the pan end walls 22, or between portions of the trivet side walls 46 and the side walls 26 of the pan 14, as well as between the trivet bottom 54 and the bottom 28 of the pan. The hollow passages 60 are extend to vents 30, exemplarily through an upward facing surface 62 of the trivet 50. The hollow passages 60 are in fluid communication with the vents 30 provide a path through which air may flow between the vents 30 and the plurality of holes 44 extending along the ribs 32. This promotes air circulation either in the direction into the vents 30 and out of the holes 44 or in the direction into the holes 44 and out of the vents 30. The trivet 50 further may include one or more stanchions 58, which engage a portion of the pan 14. The stanchions 58, as depicted in Fig. 10 may contact the bottom 28 of the pan 14. However, in other examples, the stanchions 58 may extend outwardly from the trivet end walls 52 or trivet side walls 46 for respective engagement with the pan end walls 22 or the pan side walls 26.

In still further examples, the trivet 50 may further include an identifier 36, for example, as described above, and which applies to the example of Figures 9 and 10 in its entirety. Exemplarily, the identifier 36 may take the form of an RFID tag, or other forms of identifiers as disclosed above or will be recognized based upon the present disclosure. The identifier 36 may further comprise a sensor as described above. As exemplarily shown in Fig. 10, the identifier 36 may be on a surface of the trivet 50 or may be embedded into the trivet 50. Incorporation of the identifier 36 into the trivet 50 provides the optional functionality enabled by the identifier as described above, while working with a pan of standard dimensions and without any integrated identifier. By incorporating the identifier 36 into the structure of the trivet 50, and in some examples, embedding the identifier 36 within the trivet 50, the identifier receives a form of protection improving durability and useful life of the identifier 36.

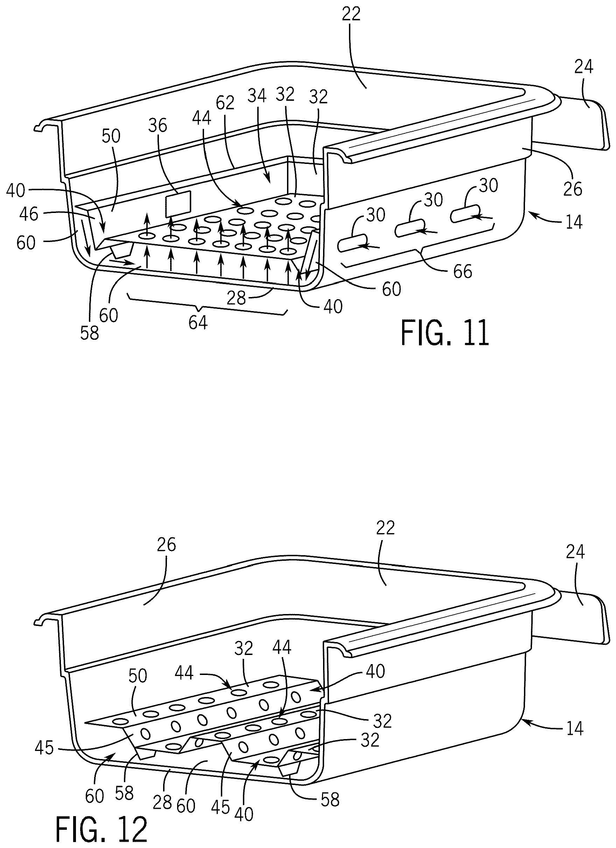

Figures 11-13 provide still further examples of trivets 50 as may be used in conjunction with pans 14. Like reference numbers indicate like structures between the examples and based upon the disclosure herein a person of ordinary skill in the art could combine features of any of Figs. 11, 12, or 13 with any of the other features shown in the other examples herein while remaining within the scope of the present disclosure. Additionally, examples disclosed with respect to Figs. 11-13 may include more or fewer components than depicted in those specific examples while remaining within the scope of the present disclosure.

Figure 11 depicts an example of a trivet 50 within a pan 14, including many of the features as shown and described above. As shown in Fig. 11, the trivet 50 sits below the upper lip 56 of the pan 14. The upward facing surface 62 of the trivet 50 is internal to the side walls 26 and the end walls 22 of the pan 14. The upward facing surface 62, along with the trivet side walls 46 and/or trivet end walls 52 to form the hollow passage 60 through which air flows to ventilate the food products therein. Fig. 11 further includes arrows denoting air flow through the trivet 50. In an example, the heat energy from the holding bin 12 heats the air between the bottom 28 of the pan 14 and the trivet 50, this air denoted by arrows 64 rises through the holes 44 in the rib 32, for example by convection. This air movement draws fresh air denoted by arrows 66 from exterior the pan 14 through the vents 30 in the side of the pan 14. The fresh air is generally less humid than the air about the food product within the food receiving area 34, and therefore is able to circulate past the food product to manage the accumulation of moisture around the food product. The upward facing surface 62 is located above the vents 30 in the pan 14 to direct the fresh air 66 within the hollow passage 60 to the position below the trivet 50. Additionally, in the example depicted in Fig. 11, the channels 40 extend between the rib 32 and the walls 46, 52 and exemplarily functions as a cutter to further direct moisture away from the food product in the food receiving area 34.

Figure 12 depicts an example of a trivet 50 within a pan 14, including many of the features as shown and described above. The example trivet 50 as shown in Fig. 12, is similar to those as described with respect to Figs. 8A and 9 wherein the trivet 50 includes multiple ribs 32 and channels 40 defined therebetween. These ribs 32 and channels 40 are arranged longitudinally along the major axis of the pan 14, for example extending between end walls 22 and/or oriented in a generally same direction as the handle(s) 24. As shown in Fig. 12, the ribs 32, channels 40 and any transition portion 45 of the rib 32 (e.g. the side or angled portion between the height of the rib 32 and the bottom of the channel 40) may include holes 44 for ventilation, for example by heated air rising through the trivet 50 as described above with respect to Fig. 11. Additionally, the holes 44 provide a path for the collection of condensation, directing it into the bottom of the pan 14 away from the food products elevated by the trivet 50 and the ribs 32 of the trivet 50.

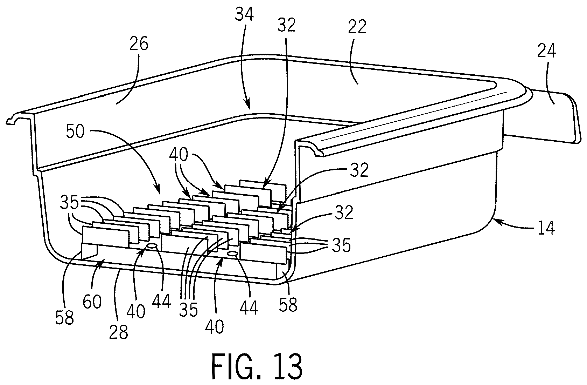

Figure 13 depicts an example of a trivet 50 within a pan 14, including many of the features as shown and described above. The example trivet 50 as shown in Fig. 13 is exemplarily constructed of polymer, polycarbonate, metal, metal wire form, or other construction as would be recognized based upon the present disclosure. In the trivet 50 depicted in Fig. 13, the ribs 32 exemplarily still extend longitudinally along the major axis of the pan 14, for example extending between end walls 22 and/or oriented in a generally same direction as the handle(s) 24. However, the ribs 32 are constructed of a plurality of rib fins 35 which are arranged laterally across the minor axis of the pan 14. The ribs 32 are separated by channels 40. In an example, the channels 40 include holes 44 for the movement of air between the food receiving area 34 and the hollow passage 60 below the trivet 50. In a non-limiting example, the channels 40 may have a continuous surface, apart from any holes 44, to exemplarily provide a surface upon which a utensil may slide when used to grasp one or more food products for retrieval from the pan 14. The rib fins 35 may exemplarily function to elevate the food products, above the channels 40, further promoting air circulation about the food products and separating the food products from any accumulation of condensation in the channels 40.

In the above description, certain terms have been used for brevity, clarity, and understanding. No unnecessary limitations are to be inferred therefrom beyond the requirement of the prior art because such terms are used for descriptive purposes and are intended to be broadly construed. The different systems and described herein may be used alone or in combination with other systems. It is to be expected that various equivalents, alternatives, and modifications are possible within the scope of the appended claims.

This written description uses examples to disclose the invention, including the best mode, and also to enable any person skilled in the art to make and use the invention. The patentable scope of the invention is defined by the claims and may include other examples that occur to those skilled in the art. Such other examples are intended to be within the scope of the claims if they have structural elements that do not differ from the literal language of the claims, or if they include equivalent structural elements with insubstantial differences from the literal languages of the claims.

## Claims

1. A food holding pan comprising:
opposed side walls, opposed end walls, and a pan bottom connected to the opposed side walls and the opposed end walls, all of which define a food receiving area;
a plurality of ribs extending into the food receiving area in a direction away from the pan bottom, the plurality of ribs defining at least one channel therebetween; and
a plurality of vents in fluid communication with the food receiving area and configured to promote a flow of air through the food receiving area.

2. The food holding pan of claim 1, further comprising an identifier affixed to the food holding pan, wherein the identifier comprises at least one of an RFID tag or a sensor wherein the sensor measures at least one of temperature or humidity.

3. The food holding pan of claim 1 or 2, wherein the plurality of ribs are integral with the pan bottom; and optionally wherein the plurality of ribs extend from the pan bottom up at least one of the end walls or the side walls, and the plurality of vents are positioned in at least one of the end walls or the side walls between the plurality of ribs.

4. The food holding pan of claims 1 to 3, further comprising:
at least one handle extending from an end wall of the opposed end walls, the at least one handle extending generally in a longitudinal direction and the end wall extending generally in a lateral direction, wherein optionally:
the plurality of ribs and the at least one channel are further extend along the pan bottom in the lateral direction an additional channel extending along the pan bottom in the longitudinal direction through the plurality of ribs or
the plurality of ribs and the at least one channel extend along the pan bottom in the longitudinal direction.

5. The food holding pan of any of claims 1 to 4, wherein the plurality of vents comprise upwardly and outwardly extending louvers.

6. The food holding pan of any of claims 1 to 5, further comprising a trivet, the trivet configured to be removably received interior of the side walls, end walls, and the pan bottom, wherein the trivet further defines the food receiving area and comprises the plurality of ribs; and optionally
wherein the trivet defines a hollow passage between the trivet and the pan bottom, and a plurality of holes extend through at least one of the ribs or the at least one channel; and/or wherein the trivet further comprises at least one of an identifier or a sensor affixed to the food holding pan, wherein the sensor measures at least one of temperature or humidity.

7. A trivet configured to be removably received within a food holding pan, the trivet comprising:
at least one rib;
at least one channel adjacent the at least one rib; and
a plurality of holes, with at least one hole extending through at least one of the at least one rib or the at least one channel;
wherein the trivet is configured to define a hollow passage at least partially below the plurality of holes.

8. The trivet of claim 7, further comprising an identifier and/or a sensor and additionally or alternatively,
at least one stanchion extending in a direction opposite the at least one rib and configured to define the hollow passage;
wherein the at least one rib is a plurality of ribs that extend along a major axis dimension of the trivet, and the at least one channel is between ribs of the plurality of ribs, and the plurality of holes extend through the at least one rib and the at least one channel.

9. A food holding pan comprising:
opposed side walls, opposed end walls, and a pan bottom connected to the opposed side walls and the opposed end walls; and
a trivet configured to be removably received interior of the opposed side walls, opposed end walls, and the pan bottom and configured to define a food receiving area, the trivet further comprising:
at least one rib extending into the food receiving area in a direction away from the pan bottom;
at least one channel adjacent the at least one rib; and
a plurality of holes, with at least one hole extending through at least one of the at least one rib or the at least one channel;
wherein the trivet is configured to define a hollow passage between the trivet and the pan bottom.

10. The food holding pan of claim 9, further comprising at least one vent in fluid communication with the food receiving area through the hollow passage and the plurality of holes, and configured to promote a flow of air through the food receiving area, optionally wherein the at least one vent comprises a plurality of vents that extend through at least one of the end walls or the side walls.

11. The food holding pan of claim 10, wherein the trivet comprises trivet side walls or trivet end walls and an upward facing surface extending therefrom to define the hollow passage about the at least one vent to promote the flow of air through the vents into the hollow passage and to the food receiving area from the hollow passage.

12. The food holding pan of any of claims 9 to 11, wherein the food holding pan is configured to collect condensation from the food receiving area in the hollow passage.

13. The food holding pan of any of claims 9 to 12, further comprising at least one stanchion extending from the trivet in a direction opposite the at least one rib and configured to define the hollow passage.

14. The food holding pan of any of claims 9 to 13, wherein the food holding pan is further in accordance with any of claims 1 to 5.

15. A food holding pan according to any of claims 6 or 9 to 14, wherein the trivet is a trivet according to any of claims 7 or 8.
